Europäisches Patentamt

European Patent Office

Office européen des brevets

(11) Publication number: **0 150 741**
A2

# (12) EUROPEAN PATENT APPLICATION

(21) Application number: 85100256.8

(22) Date of filing: 12.01.85

(51) Int. Cl.⁴: **C 09 D 5/08**

(30) Priority: 20.01.84 JP 9112/84

(43) Date of publication of application: 07.08.85
Bulletin 85/32

(84) Designated Contracting States: DE GB

(71) Applicant: **KABUSHIKI KAISHA TOYOTA CHUO
KENKYUSHO, 41-1, Aza Yokomichi Oaza Nagakute
Nagakute-cho, Aichi-gun Aichi-ken, 480-11 (JP)**

(72) Inventor: **Suzuki, Shouichi, 1-36, Sakashita-cho
Chikusa-ku, Nagoya-shi Aichi-ken (JP)**
Inventor: **Araga, Toshimi, 35, Nisshin 2-chome
Nakata-cho, Toyota-shi Aichi-ken (JP)**
Inventor: **Tsuji, Ryusuke, 1-6, Ukishima-cho Mizuho-ku,
Nagoya-shi Aichi-ken (JP)**
Inventor: **Fukushima, Yoshiaki, 32-13, Otsu Aza
Yamanoda Oaza Nagakute, Nagakute-cho Aichi-gun
Aichi-ken (JP)**
Inventor: **Banno, Kouji, 31, Gozenba-cho Tempaku-ku,
Nagoya-shi Aichi-ken (JP)**
Inventor: **Hiruta, Osamu, 41-3, Aza Yokomichi Oaza
Nagakute Nagakute-cho, Aichi-gun Aichi-ken (JP)**

(74) Representative: **Blumbach Weser Bergen Kramer
Zwirner Hoffmann Patentanwälte, Radeckestrasse 43,
D-8000 München 60 (DE)**

(54) Corrosion protective paints.

(57)    The corrosion protective paint includes a resin for paints as a main ingredient and mountain leather which is a clay mineral in a powder form mainly composed of hydrous magnesium silicate or hydrous magnesium aluminum silicate, such as sepiolite and attapulgite. The corrosion protective paint may also include hydrotalcite or metal hydroxide as a corrosion inhibitor. This paint prevents corrosion of an article even when exposed to saline such as sea water.

EP 0 150 741 A2

TITLE OF THE INVENTION                    85/8701 EPC

CORROSION PROTECTIVE PAINTS

BACKGROUND OF THE INVENTION

Field of the Invention:

The present invention relates to corrosion protective paints which comprise an organic resin for paints as a main ingredient and mountain leather, and may further comprise a corrosion inhibitor chiefly comprising a hydroxide.

Description of the Prior Art:

The object of coating is in general the impartation of a beautiful appearance and the corrosion protection. However, in the recent years, the use atomosphere of coated articles has been not only more and more variegated but also increasingly subjected to severe conditions. For example, automobiles running on roads spread with an antifreezing agent, such as calcium chloride, rock salt, etc., are always in contact with the aforesaid antifreezing agent. Further, coated articles such as aluminum sashes, balconies of buildings in coast areas are exposed to wind and rain containing seawater.

0150741

Under such circumstances, in some cases, the antifreezing agent reaches a constituting member through the coated film, whereby the constituting member generates rust beneath the coated film and blisters of the coated film occurs, and further the coated film ruptures to ooze out an aqueous suspension of red rust. Further, when the coated film is damaged, for example, cracked or so, by contact with other objects, rust begins to generate in a thread form from the crack, i.e., the so-called filiform corrosion occurs. As a result, not only the appearance of the coated article is deteriorated but also the life of the coated article could be shortened.

In order to prevent such corrosion, it has been attempted to thicken the coated film by repeatedly coating a paint, etc. However, it causes such problems that the number of coating steps was increased, that the amount of a paint to be employed was increased, and soon.

SUMMARY OF THE INVENTION

The inventors of the present invention have been intensively studying for the purpose of developing a paint which prevents the aforesaid blisters and filiform corrosion and, as a result, have accomplished the present invention.

An object of the present invention is to provide a protective paint which does not allow ions in saline to pass through the coated film even when exposed to saline for a prolonged time, thereby preventing the generation of corrosion such as blisters, etc.

Another object of the present invention is to provide a protective paint which has effects to prevent blisters of a coated film resulting from the corrosion of a base material and also to prevent filiform corrosion from generating from incised portions of the coated film.

A corrosion protective paint of the present invention comprises a resin for paints as a main ingredient and 0.5 to 50 parts by weight of mountain leather per 100 parts by weight of the resin. The paint of the invention may also include a corrosion inhibitor.

DETAILED DESCRIPTION

The paint according to the present invention comprises an organic paint composed of a resin for paints as a main ingredient and mountain leather, and may contain a solvent for maintaining a liquid form required for forming a coated film.

The resin for paints may be any of those conventionally used in coating, as far as it is easily formed into a film form and moreover can be satisfactorily mixed with mountain leather and be appropriately dispersed. Specific examples of the resin include thermosetting resins such as aminoalkyd resins, acrylic resins, urethane resins, epoxy resins, urea resins, phenolic resins, etc., thermoplastic resins such as nylon resins, vinyl chloride resins, etc., latex type resins such as styrene-butadiene resins, nitrile-butadiene resins, etc., and also nitrocellulose.

The aforesaid mountain leather is a powder of a fibrous clay mineral (i.e. clay mineral having an inverted ribbon structure) chiefly comprising hydrous magnesium silicate or hydrous magnesium aluminum silicate having hydroxyl groups on the surface thereof. Specific minerals include sepiolite and attapulgite. The particle diameter of the powder is preferably in the range of from 0.1 to 100 μm.

The corrosion protective paint according to the present invention is a mixture of the aforesaid resin for paints and the mountain leather. The amount of the mountain leather mixed is 0.5 - 50 parts by weight per 100 parts by weight of the resin for paints, and a corrosion preventing effect in manifested in this range. In order to obtain a better corrosion protecting effect, the range of 10 - 50 parts by weight is preferable. Where the amount of the mountain leather is less than 0.5 part by weight, the effect to prevent corrosion is not sufficient. With more than 50 parts by weight, the appearance of the coated film deteriorates and at the same time the flexibility of the coated film is lowered and although the hardness thereof is increased, the brittleness is accordingly increased and thus it is not preferred.

The corrosion protective paint according to the present invention may be such that the powder of the mountain leather is appropriately dispersed and solidified in the aforesaid resin for paints, or that rendered easy to be coated by imparting an appropriate viscosity by adding a solvent. Further, the paint may contain appropriate amounts of a paint for coloring, a resin preservative, a defoaming agent, etc.

The corrosion protective paint according to the present invention formed as a coated film on the surface of a coated article manifests an effect to prevent the corrosion of the base material, which otherwise causes peel-off of the coated film, such as blisters, etc. Although this phenomenon has not yet been clarified, it may be concluded as follows: When corrosive ions such as $Na^+$, etc. penetrate from the surface of the coated film into the inside thereof, the mountain leather present in the coated film takes the $Na^+$ in and prevents the $Na^+$ from reaching the base metal.

Further, where the coated film has an incision, said incised portion (i.e. an exposed portion of the base metal) becomes an anode of a corrosion electrode and the part underlying the coated film surrounding the incised portion becomes a cathode. In this case, where $Na^+$ is present in the cathode, $OH^-$ generated in the cathode is successively neutralized by the $Na^+$, whereby the corrosion of the base metal proceeds. It is believed that by the presence of the mountain leather therein, the $Na^+$ is taken in by said mountain leather and thus the corrosion is prevented.

The method of preparing the corrosion protective paint according to the present invention is as follows:

First, an organic paint commonly used is prepared. The organic paint is preferably that containing, in addition to the resin for paints, additives such as a pigment etc., and further a solvent for imparting a viscosity suitable for coating operations.

Further, a predetermined amount of mountain leather made into a powder form by a ball mill or the like is prepared, and mixed with the aforesaid organic paint. At that time, since the corrosion protecting effect of the coated film depends on the dispersion condition of the mountain leather, it is important to make the dispersion uniform.

In order to make the dispersion of the mountain leather more uniform, it is preferred to further add 5 - 10 times the weight of the mountain leather of a solvent.

The paint obtained as above is applied to a desired base metal by such method as brushing, spraying by a spray gun, etc. and thereafter dried to form a coated film on the surface of a base metal. The obtained coated film is not easily susceptible to corrosion such as blisters even when exposed to saline for a prolonged time because the cations in saline do not easily reach the base metal.

The corrosion protective paint may further include a corrosion inhibitor for preventing filiform corrosion.

The corrosion inhibitor may include hydrotalcites which are complex salts of magnesium and aluminum and metal hydroxides having acid neutralizing ability. The hydrotalcites are those of the chemical formulae: $Mg_4Al_2(OH)_{12}CO_3 \cdot 3H_2O$, $Mg_6Al_2(OH)_{16}CO_3 \cdot 5H_2O$ and $Mg_6Al_7(OH)_{16}CO_3 \cdot 4H_2O$. These substances have an effect to efficiently take in chlorine ions ($Cl^-$) present at the top of the filiform corrosion generated on the coated film and stably fix them. The aforesaid metal hydroxides include calcium hydroxide, magnesium hydroxide, aluminum hydroxide, zinc hydroxide etc. These hydroxides have an acid neutralizing ability to neutralize an acid region containing $Cl^-$ at the top of the filiform corrosion part thereby preventing the progress of the corrosion.

The amounts of the mountain leather and the corrosion inhibitor to be contained in the corrosion protective paint according to the present invention are in the range of 0.5 to 50 parts by weight and 0.05 to 20 parts by weight, respectively, per 100 parts by weight of the resin for paints, and it is preferred that the total of both be not greater than 60 parts by weight.

The greater the amount of the mountain leather contained, the greater the corrosion protecting effect. However, if it exceeds 50 parts by weight, the flexibility of the coated film thus obtained is lowered and it tends to brittle.

The effect to prevent the filiform corrosion is increased with the increase in the amount of the corrosion inhibitor contained. However, the amount exceeding 20 parts by weight gives adverse influences to the appearance, for example, low stability of the paint and poor brightness of the resulting coated film.

In preparing the aforesaid corrosion protective paint, mountain leather is added to an organic paint mainly comprising a resin for paints, and further a powder of the aforesaid hydrotalcite or metal hydroxide is added, mixed and kneaded. At that time, in order ot adjust the viscosity of the paint, it is preferred to add an appropriate amount of a solvent depending on the kind and form of the resin for paints.

By the aforesaid kneading, the mountain leather and the corrosion inhibitor are uniformly dispersed. Since the dispersion condition of the mountain leather and the corrosion inhibitor predominates the corrosion protecting effect of the obtained coated film, care must be taken to prevent poor dispersion. For dispersing the mountain leather, it is preferred to add 5 - 10 times the weight of the mountain leather of a solvent and disperse it using an emulsifier. The corrosion inhibitor is very compatible with the organic paint and is relatively easily dispersed.

The corrosion protective paint prepared as mentioned above is coated on a base metal composed of an iron plate, etc. and dried to obtain a coated film.

The coated film has advantages in that blisters are not generated and the generation of filiform corrosion from a damaged part is extremely low.

Having generally described this invention, a further understanding can be obtained by reference to certain specific examples which are provided herein for purposes of illustration only and are not intended to be limiting unless otherwise specified.

Example 1

There were prepared a commercially available thermosetting acrylic resin and a dispersion made by uniformly dispersing, by use of an emulsifier, a 300-mesh pass mountain leather powder in a thinner for paints (in an amount 5 - 10 times the weight of mountain leather) mainly composed of xylene. Then, both were mixed and kneaded so that the mountain leather was contained in amounts of 1 part by weight, 5 parts by weight, 10 parts by weight, 30 parts by weight and 50 parts by weight, respectively, per 100 parts by weight of the acrylic paint resin to prepare five kinds of corrosion protective paints according to the present invention.

Further, the aforesaid respective paints were diluted with a thinner, and, after adjusting each viscosity to suit for coating by a spray gun, the respective paints were coated on SPCC (Japanese Industrial Standard) soft steel plates having a size of 20 cm x 20 cm and a thickness of 0.8 mm and previously treated with zinc phosphate. After coating, these soft steel plates were held at 140°C for 30 minutes to effect baking, thereby to obtain a coated film having a thickness of about 30 μm.  For comparison, a coated film composed of the aforesaid acrylic paint containing no mountain leather powder was formed on the soft steel plate surface.  These soft steel plates were contacted with 5% saline at 35°C for 10 days to conduct a corrosion resistance test.

While the coated film with the paint containing the mountain leather did not show blisters, the comparative coated film showed several black blisters and transparent blisters.

Further, the coated film was incised by a razor and subjected to a test in which the coated film is contacted with saline similar to the above, and thereafter it was peeled off using an adhesive tape.  The peeled width from the incised site was 1 mm or less with the coated film containing the mountain leather whereas it was about 6 mm with the comparative coated film.

From the above results, it was found that the coated film formed with the paint comprising the acrylic paint resin as a main  ingredient and the mountain leather has an effect to prevent the generation of blisters and corrosion.

Example 2

An amino-alkyd resin was prepared as a resin for coating and an soft steel plate sample (JIS SPCC) formed with a coated film as in Example 1 was prepared. Also, a comparative sample containing no mountain leather was prepared. These samples were subjected to a corrosion resistance test similar to that in Example 1. As a result, the coated film formed with the paint containing the mountain leather did not show blisters. On the other hand, that containing no mountain leather showed the generation of several black blisters.

Example 3

Corrosion protective paints, in which the amounts of mountain leather contained per 100 parts by weight of the resin component were 1 part by weight, 5 parts by weight, 10 parts by weight, 30 parts by weight and 50 parts by weight, were prepared in a manner similar to that in Example 1 except that the resin for paints and solvent used in Example 1 were replaced by an acrylic resin paint containing a coloring pigment.

Thereafter, coated films were formed by coating on soft steel plates in a manner similar to that in Example 1.

Further, when a corrosion resistance test similar to that in Example 1 was conducted, corrosion such as blisters was not observed with any coated film. A few blisters were found with that formed with a coated film containing no mountain leather.

Example 4

A powder of hydrotalcite was uniformly dispersed in a thinner for coating (in an amount 20 times the weight thereof) chiefly comprising xylene using ultrasonic wave, and thereafter various amounts of a mountain leather powder were added thereto to obtain two dispersions having different ratios by weight of the hydrotalcite to the mountain leather.

On the other hand, these dispersions were mixed with a commercially available acrylic paint resin to prepare six corrosion protective paints containing the amounts (parts by weight) of the hydrotalcite and the mountain leather set forth in the following table per 100 parts by weight of the resin.

Table

| Run No. | Hydrotalcite | Mountain Leather |
|---------|--------------|------------------|
| 1 | 20 | 48 |
| 2 | 10 | 24 |
| 3 | 10 | 10 |
| 4 | 5 | 5 |
| 5 | 20 | 10 |
| 6 | 6 | 3 |

Further, a thinner was added to these paints and, after adjusting each viscosity to suit for spray coating, sprayed on soft steel plates similar to those in Example 1 to form coat films. Thereafter, a corrosion resistance test similar to that in Example 1 was conducted, and as a result, no blisters were found with any coat film.

Furthermore, the aforesaid coat films were incised by a razor, then contacted with 5% saline, and the condition of the generation of filiform corrosion was observed while comparing with a separately prepared coated film containing no hydrotalcite. As a result, when the filiform corrosion reached a length of 10 mm on a film containing no hydrotalcite, the maximum length of such corrosion on those containing the hydrotalcite was only about 3 mm. It can be seen from these results that the coated films containing both hydrotalcite and mountain leather have an effect to prevent or inhibit blisters and filiform corrosion.

Example 5

Nitrocellulose as a resin for coating and a dispersion obtained by adding a hydrotalcite powder and mountain leather to a lacquor thinner (in an amount 5 times the weights thereof) were mixed in appropriate amounts to prepare corrosion protective paints containing the hydrotalcite and mountain leather in the amounts set forth in the table in Example 4. These paints were sprayed on soft steel plates (JIS SPCC) similar to those in Example 1 and dried to form coated films, which were contacted with 3% saline for 6 days. As a result, no specimen showed blisters. Further, for comparison, that composed of nitrocellulose and 15 parts by weight of mountain leather and that composed of nitrocellulose alone were prepared and the aforesaid test was conducted. As a result, although the former did not show blisters, the latter showed blisters. Further, a test similar to that in Example 4 was conducted with the coated films imparted with incision by a razor. As a result, when the length of the filiform corrosion reached about 10 mm with that containing neither hydrotalcite nor mountain leather, that containing both showed a maximum length of about 4 mm and that containing mountain leather alone showed about 9 mm.

Example 6

Appropriate amounts of hydrotalcite and a mountain leather powder were mixed together. Then, purified water in an amount 10 times the weights thereof was added thereto to prepare dispersions. The dispersions thus obtained were then mixed with a styrene-butadiene latex, respectively, to prepare corrosion protective paints containing the hydrotalcite and the mountain leather in the amounts set forth in the table in Example 4 per 100 parts by weight of the resin component.

Also, a corrosion protective paint containing mountain leather alone in the amount set forth in the table was prepared.

These were coated on soft steel plates similar to those shown in Example 1 and baked at 120°C for 30 minutes. This operation was repeated twice, and dried to obtain a coated film of about 30 μm in thickness. For comparison, a coated film containing neither hydrotalcite nor mountain leather was formed.

These coated films were contacted with 5% saline at 35°C for 10 days. The coated film containing both and that containing the mountain leather alone showed no blisters, while that to which nothing was added i.e., that composed of the resin alone, showed several blisters.

Further, those were imparted with incision by a razor and thereafter contacted with saline. When the length of the filiform corrosion reached 10 mm with the coated film containing the mountain leather alone, the maximum length thereof was about 2 mm with the coated film containing both the mountain leather and the hydrotalcite.

It can be seen from the above results that the mountain leather and the hydrotalcite have an effect to inhibit corrosion even on the latex paint.

WHAT IS CLAIMED IS: 85/8701 EPC

1. A corrosion protective paint comprising a resin for paints as a main ingredient and 0.5 to 50 parts by weight of mountain leather per 100 parts by weight of said resin.

2. A corrosion protective paint according to claim 1, wherein said resin is selected from among thermosetting resins.

3. A corrosion protective paint according to claim 1, wherein said resin is selected from among thermoplastic resins.

4. A corrosion protective paint according to claim 1, wherein said resin is selected from among latex type resins.

5. A corrosion protective paint according to claim 1, wherein said resin is nitrocellulose.

6. A corrosion protective paint according to claim 2, wherein said thermosetting resin is at least one resin selected from the group consisting of aminoalkyd resin, acrylic resin, urethane resin, epoxy resin, urea resin and phenolic resin.

7. A corrosion protective paint according to claim 1, wherein said mountain leather is selected from sepiolite and attapulgite.

8. A corrosion protective paint according to claim 7, further comprising 0.05 to 20 parts by weight of corrosion inhibitor per 100 parts by weight of said resin.

9. A corrosion protective paint according to claim 8, wherein said corrosion inhibitor is one of hydrotalcite and metal hydroxide.

10. A corrosion protective paint according to claim 9, wherein said metal hydroxide is at least one member selected from the group consisting of calcium hydroxide, magnesium hydroxide, aluminum hydroxide and zinc hydroxide.